# EUROPEAN PATENT APPLICATION

(11) **EP 4 557 804 A1**
(43) Date of publication of application: **21.05.2025**
(21) Application number: 23844802.1
(22) Date of filing: 20.02.2023
(51) Int. Cl.: H04W 24/02

(54) **CONTROL METHOD FOR NETWORKING USING RECONFIGURABLE INTELLIGENT SURFACES, AND CONTROLLER AND STORAGE MEDIUM**

(30) Priority: 29.07.2022 CN 202210906010
(71) Applicant: ZTE Corporation, Shenzhen, Guangdong 518057 (CN)
(72) Inventor: HE, Bo, Shenzhen, Guangdong 518057 (CN); LI, Bin, Shenzhen, Guangdong 518057 (CN)
(74) Representative: Savi, Massimiliano
(86) International application number: PCT/CN2023/077225
(87) International publication number: WO 2024/021583

(57) **Abstract**

Disclosed in the present application are a control method for networking using reconfigurable intelligent surfaces, and a controller and a storage medium. The control method for networking using reconfigurable intelligent surfaces comprises: determining a first surface and a second surface from among a plurality of reconfigurable intelligent surfaces (S210); and sending, to the first surface and the second surface, first configuration information corresponding to the first surface, so that the first surface and the second surface perform codebook configuration processing (S220).

## Description

### CROSS-REFERENCE TO RELATED APPLICATION

This application is filed on the basis of Chinese patent application No. 202210906010.6 filed July 29, 2022, and claims priority to the Chinese patent application, the entire contents of which are incorporated herein by reference.

### TECHNICAL FIELD

The present disclosure relates to the technical field of communication, and more particularly, to a method for controlling Reconfigurable Intelligent Surface (RIS) networking, a controller, and a storage medium.

### BACKGROUND

In the field of communications, a Reconfigurable Intelligent Surface (RIS) can perform configuration according to codebook information sent by a base station, to change the phase, polarization, and other attributes of an incident signal to fill a coverage hole, improve indoor coverage, enhance edge coverage, etc.

However, in conventional RIS networking, the base station needs to calculate codebooks of multiple RISs, and configure the codebooks to the RISs through codebook control signaling. The base station is required to have a high computing power, the overheads of the codebook control signaling between the base station and the RISs are high, and the timeliness of codebook control is often inadequate.

### SUMMARY

Embodiments of the present disclosure provide a method for controlling RIS networking, a controller, and a storage medium.

In accordance with a first aspect of the present disclosure, an embodiment provides a method for controlling RIS networking, applied to a base station in an RIS network, where the RIS network includes a plurality of RISs, the method including: determining a first RIS and a second RIS from a plurality of RISs; and sending first configuration information corresponding to the first RIS to the first RIS and the second RIS, for the first RIS and the second RIS to perform codebook configuration processing.

In accordance with a second aspect of the present disclosure, an embodiment provides a method for controlling RIS networking, applied to a first RIS in an RIS network, where the RIS network includes a base station, the method including: receiving first configuration information sent by the base station, where the first configuration information is configuration information corresponding to the first RIS; and performing codebook configuration processing according to the first configuration information.

In accordance with a third aspect of the present disclosure, an embodiment provides a method for controlling RIS networking, applied to a second RIS in an RIS network, where the RIS network includes a base station, the method including: receiving first configuration information sent by the base station, where the first configuration information is configuration information corresponding to a first RIS; and performing codebook configuration processing according to the first configuration information.

In accordance with a fourth aspect of the present disclosure, an embodiment provides a controller, including a memory, a processor, and a computer program stored in the memory and executable by the processor, where the computer program, when executed by the processor, causes the processor to implement the method for controlling RIS networking in accordance with any embodiment of the first aspect, the second aspect, and the third aspect.

In accordance with a fifth aspect of the present disclosure, an embodiment provides a computer-readable storage medium, storing a computer-executable instruction which, when executed by a processor, causes the processor to implement the method for controlling RIS networking in accordance with any embodiment of the first aspect, the second aspect, and the third aspect.

### BRIEF DESCRIPTION OF DRAWINGS

FIG. 1 is a schematic diagram of a conventional RIS network;
FIG. 2 is a schematic flowchart of a method for controlling RIS networking according to an embodiment of the present disclosure;
FIG. 3 is a flowchart of performing codebook configuration processing according to first configuration information according to an embodiment of the present disclosure;
FIG. 4 is a flowchart of generating the first configuration information according to location information of a first RIS according to an embodiment of the present disclosure;
FIG. 5 is a flowchart of generating the first configuration information according to an embodiment of the present disclosure;
FIG. 6 is a schematic flowchart of a method for controlling RIS networking applied to a first RIS according to an embodiment of the present disclosure;
FIG. 7 is a schematic flowchart of a method for controlling RIS networking applied to a second RIS according to an embodiment of the present disclosure;
FIG. 8 is a flowchart of performing codebook configuration according to location information of the first RIS according to an embodiment of the present disclosure;
FIG. 9 is a flowchart of obtaining second configuration information according to an embodiment of the present disclosure;
FIG. 10 is a schematic structural diagram of RIS networking according to an embodiment of the present disclosure;
FIG. 11 is a schematic flowchart of an example of a method for controlling RIS networking according to an embodiment of the present disclosure; and
FIG. 12 is a structural diagram of a controller according to an embodiment of the present disclosure.

### DETAILED DESCRIPTION

To make the objects, technical schemes, and advantages of the present disclosure clear, the present disclosure is described in further detail in conjunction with accompanying drawings and embodiments. It should be understood that the embodiments described herein are merely used for illustrating the present disclosure, and are not intended to limit the present disclosure.

In some embodiments, although functional modules have been divided in the schematic diagrams of apparatuses and logical orders have been shown in the flowcharts, in some cases, the modules may be divided in a different manner, or the steps shown or described may be executed in an order different from the orders as shown in the flowcharts. The terms such as "first", "second" and the like in the description, the claims, and the accompanying drawings are used to distinguish similar objects, and are not necessarily used to describe a specific sequence or a precedence order.

In terms of RIS networking and control technologies in the field of communications, an RIS can change the phase, polarization, and other attributes of an incident signal to implement single-beam reflection, multi-beam reflection, diffuse scattering, refraction, transmission, and other flexible effects, so as to fill a coverage hole, improve indoor coverage, enhance edge coverage, etc. RISs are mainly divided into two forms: a static passive RIS (with a fixed codebook which is non-reconfigurable) and a dynamic/semi-static active RIS. The static passive RIS has a preset fixed unit array codebook, which can achieve only a fixed reflection mode and direction, and cannot be adjusted. The dynamic/semi-static active RIS has a reconfigurable unit array codebook, which can be controlled to achieve flexible beam reflection patterns and directions.

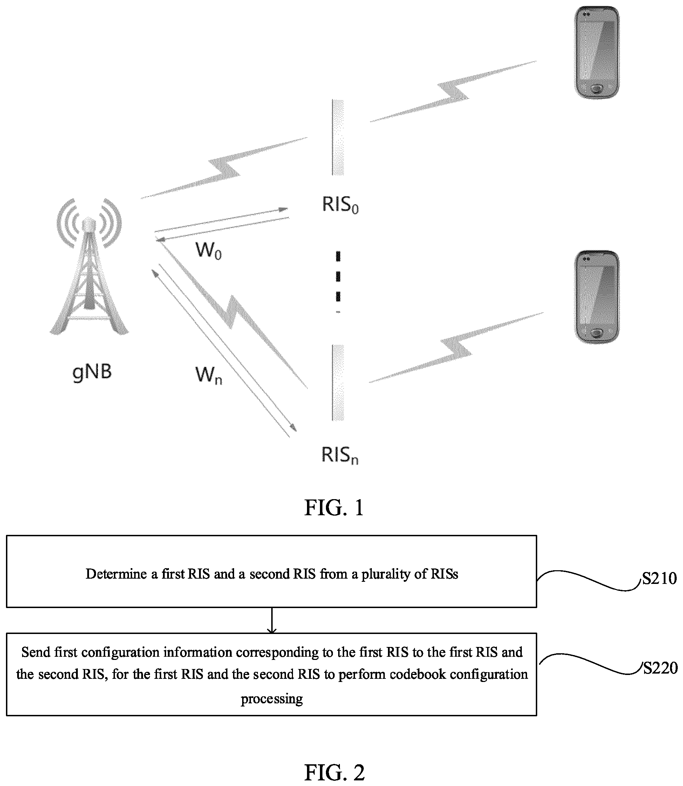

FIG. 1 is a schematic diagram of a conventional RIS network. A base station gNB (the next Generation Node B) is a 5G base station. After using an existing measurement technology to calculate a codebook W₀ corresponding to RIS₀, the base station gNB needs to send the codebook W₀ to the RIS₀ through codebook control signaling, for the RIS₀ to implement codebook configuration. Similarly, the base station gNB also needs to use the existing measurement technology to calculate codebooks W₁, ..., Wₙ of RIS₁, ..., RISₙ. In other words, the base station needs to calculate the codebooks corresponding to all RISs, and deliver the codebooks through codebook control signaling, to respectively configure W₀, ..., Wₙ to RIS₀, ..., RISₙ. Conventional RIS networking requires the base station to perform a large amount of calculation, and involves high overheads of codebook control signaling between the gNB and the RISs.

To at least partially solve the above problems, the present disclosure discloses a method for controlling RIS networking, a controller, and a storage medium. The method for controlling RIS networking includes: determining a first RIS and a second RIS from a plurality of RISs; acquiring location information of the first RIS; generating first configuration information according to the location information of the first RIS; and sending the first configuration information to the first RIS and the second RIS, for the first RIS to perform codebook configuration processing according to the first configuration information, and for the second RIS to obtain second configuration information according to the first configuration information and first relative location information, and perform codebook configuration processing according to the second configuration information, where a configuration parameter is generated according to the first RIS and sent in a multicast mode. According to the multicast configuration parameter, each of the second RIS calculates its own codebook and configures and applies the codebook. As such, the calculation amount of the base station is reduced, and the overheads of codebook control signaling between the base station and the RISs are reduced.

The embodiments of the present disclosure will be further described in detail below with reference to the accompanying drawings.

FIG. 2 is a schematic flowchart of a method for controlling RIS networking according to an embodiment of the present disclosure. The method for controlling RIS networking is applied to a base station in an RIS network. The RIS network includes a plurality of RISs. In some embodiments, the method for controlling RIS networking includes, but not limited to, the following steps.

In a step of S210, a first RIS and a second RIS are determined from a plurality of RISs.

In some embodiments, the second RIS is RIS capable of receiving a communication signal from the base station, and the first RIS is an RIS capable of transmitting a communication signal to the base station among the second RISs.

In some embodiments, the RISs are dynamic/semi-static active RISs having a reconfigurable unit array codebook, which can be controlled to achieve flexible beam reflection patterns and directions.

In some embodiments, the first RIS is a primary RIS, and the second RIS is a secondary RIS. In an RIS network, one multicast base station corresponds to a plurality of RISs, RISs capable of receiving a configuration parameter from a multicast base station gNB₀ are formed into a virtual multicast group, and an RIS capable of two-way communication with the multicast base station gNB₀ is selected from the multicast group and defined as a primary RIS RIS₀, and the other RISs in the multicast group are defined as secondary RISs, RIS₁ to RISₙ. The primary RIS and the secondary RISs are determined from the plurality of RISs, and in subsequent steps, the base station calculates codebook information of only the primary RIS, and sends the codebook information in multicast mode. As such, the calculation amount of the base station is reduced, and the overheads of codebook control signaling between the base station and the RISs are reduced.

In a step of S220, first configuration information corresponding to the first RIS is sent to the first RIS and the second RIS, for the first RIS and the second RIS to perform codebook configuration processing.

In some embodiments, sending the first configuration information to the first RIS and the second RIS includes: sending the first configuration information to the first RIS and the second RIS by using a multicast capability of the base station, where the plurality of RISs include one first RIS and a plurality of second RISs, and the first configuration information is codebook configuration information corresponding to the first RIS.

In some embodiments, after the first configuration information is sent to the second RIS, the second RIS obtains second configuration information according to the first configuration information and first relative location information, and perform codebook configuration processing according to the second configuration information. The multicast base station does not need to calculate configuration information of the second RISs, and the second RISs can adjust the first configuration information according to the relative location relationship to obtain its own configuration information. Therefore, the timeliness of codebook calculation in the system is improved, the range of system application scenarios is widened, and system capacity is improved, such that the system can be used in high-speed trains, dense buildings, and other scenarios where the environment changes rapidly.

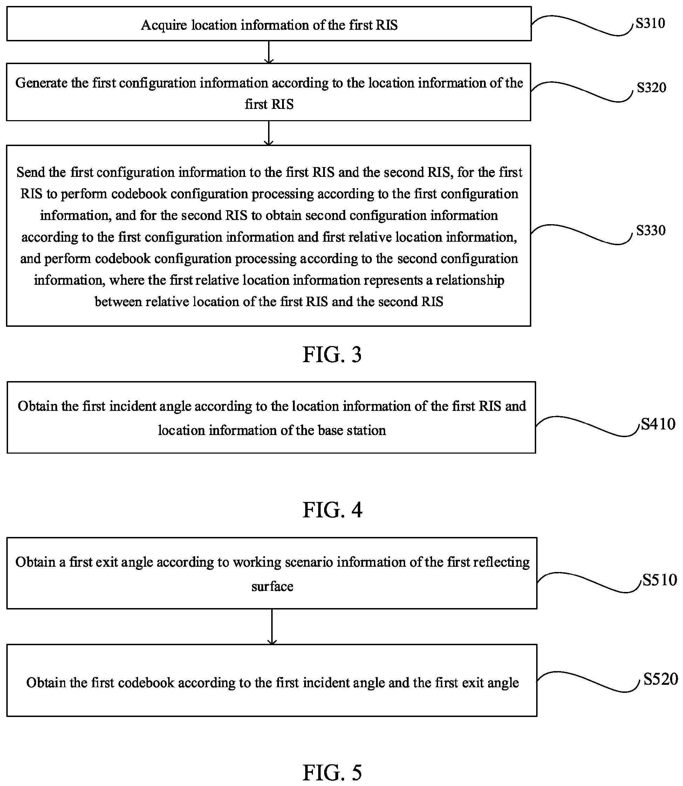

FIG. 3 is a schematic flowchart of a method for controlling RIS networking according to an embodiment of the present disclosure. The method for controlling RIS networking is applied to a base station in an RIS network. The RIS network includes a plurality of RISs. In some embodiments, the method for controlling RIS networking includes, but not limited to, the following steps.

In a step of S310, location information of the first RIS is acquired.

In some embodiments, acquiring location information of the first RIS includes: receiving, by the multicast base station gNB₀, location information sent by the first RIS, where the location information is absolute location information of the first RIS, and the absolute location information is reported by the first RIS RIS₀ to the multicast base station gNB₀; and calculating, by the gNB₀, an incident angle aᵢ₀,bᵢ₀,cᵢ₀ of the RIS₀ relative to a communication source base station gNB_{y} by using a commonly used three-dimensional calculation method according to absolute location information of the gNB_{y} and the absolute location information of the RIS₀.

In some embodiments, the multicast base station gNB₀ is the communication source base station gNB_{y}, and after the multicast base station gNB₀ receives the location information sent by the first RIS, the multicast base station gNB₀ calculates the incident angle aᵢ₀,bᵢ₀,cᵢ₀ of the RIS₀ relative to the gNB_{y} by using a commonly used three-dimensional calculation method according to absolute location information of the gNB₀ and the absolute location information of the RIS₀.

In a step of S320, the first configuration information is generated according to the location information of the first RIS.

In some embodiments, generating first configuration information according to the location information of the first RIS includes: generating a first incident angle according to the location information of the first RIS. To be specific, the multicast base station calculates only an incident angle corresponding to the first RIS according to the location information of the first RIS. After receiving the incident angle, the first RIS determines an exit angle according to a current working scenario of the RIS (e.g., transmission or reflection over a large range or in a specific direction, etc.) or other general methods, then calculates a codebook according to the incident angle and the exit angle or by using an existing commonly used method, and configures and applies the codebook. As such, the overheads of codebook control signaling between the base station and the RISs are reduced.

In some embodiments, generating first configuration information according to the location information of the first RIS includes: generating a first codebook according to the location information of the first RIS. To be specific, the multicast base station calculates only an incident angle corresponding to the first RIS according to the location information of the first RIS, determines an exit angle according to a current working scenario of the RIS (e.g., transmission or reflection over a large range or in a specific direction, etc.) or other general methods, then calculates a codebook according to the incident angle and the exit angle or by using an existing commonly used method, and sends the codebook to the first RIS, for the first RIS to configure and apply the codebook. As such, computing resources of the base station are saved.

In a step of S330, the first configuration information is sent to the first RIS and the second RIS, for the first RIS to perform codebook configuration processing according to the first configuration information, and for the second RIS to obtain second configuration information according to the first configuration information and first relative location information, and perform codebook configuration processing according to the second configuration information, where the first relative location information represents a relationship between relative locations of the first RIS and the second RIS.

In some embodiments, after the first configuration information is sent to the first RIS, the first RIS performs codebook configuration processing according to the received first configuration information. The first configuration information includes, but not limited to, any combination of a codebook W₀, absolute location information of the communication source base station gNB_{y}, an incident angle aᵢ₀,bᵢ₀,cᵢ₀, an exit angle aₒ₀,bₒ₀,cₒ₀, and a working scenario of the RIS₀. The multicast base station gNB₀ may deliver the configuration information by broadcasting signaling to RIS₀ to RISₙ in multicast mode or through third-party communication, for the first RIS RIS₀ to configure and apply the codebook W₀.

In some embodiments, the first relative location information represents a relationship between relative locations of the first RIS and the second RIS. The second RISs RIS₀ to RISₙ obtain location information Dₓ,D_{y},D_{z} relative to the first RIS RIS₀ by, for example, but not limited to, the following methods that: relative location information of RIS₀ to RISₙ is preset, obtained through positioning, obtained through mutual communication, or configured and delivered by a third party; or absolute location information of RIS₀ to RISₙ is preset, obtained through positioning, obtained through mutual communication, or configured and delivered by a third party, and RIS₀ to RISₙ calculate location information relative to RIS₀ according to the absolute location information.

In some embodiments, the method for controlling RIS networking further includes: obtaining, by gNB₀ to gNBₘ, location information Lₓ,L_{y},L_{z} relative to gNB₀ by, for example, but not limited to, the following methods that: relative location information of gNB₀ to gNBₘ is preset, obtained through positioning, obtained through mutual communication, or configured and delivered by a third party; or absolute location information of gNB₀ to gNBₘ is preset, obtained through positioning, obtained through mutual communication, or configured and delivered by a third party, and gNB₀ to gNBₘ calculate location information relative to gNB₀ according to the absolute location information. The RIS network includes a plurality of base stations. The plurality of base stations and the RISs are grouped according to communication capabilities, i.e., a plurality of multicast base stations correspond to a plurality of RIS groups. The RIS group includes a first RIS and a plurality of second RISs. According to functions, gNBₓ is a gNB for angle calculation, and may be any one of gNB₀ to gNBₘ, and gNB_{y} is a gNB for allocating target change channel characteristics to RIS₀ to RISₙ. A three-dimensional relative location relationship between RIS₀ and RIS₁ is defined as Dₓ₀,D_{y0},D_{z0}, ..., and a three-dimensional relative location relationship between RISₙ₋₁ and RISₙ is defined as Dₓₙ₋₁,D_{yn-1},D_{zn-1}. Dₓ,D_{y},D_{z} is a general term for the location relationship between two RISs. A three-dimensional relative location relationship between gNB₀ and gNB₁ is defined as Lₓ₀,L_{y0},L_{z0}, ..., and a three-dimensional relative location relationship between gNBₘ₋₁ and gNBₘ is defined as Lₓₘ₋₁,L_{ym-1}. Lₓ,L_{y},L_{z} is a general term for the location relationship between two gNBs. The location information includes, but not limited, to global navigation satellite system (GNSS) information and location coordinate information.

In some embodiments, a timer is set, and steps S310 to S330 is repeatedly executed according to a preset time period, i.e., a target configuration is updated according to the preset time period, and the relative position relationships in the base stations and the RISs are also updated according to the preset time period.

In some embodiments, the method of the present disclosure is applied to 5G base stations and RIS devices, and is suitable for networking scenarios with a large number of RIS devices. Because RISs are cost-effective, the networking costs can be reduced. The base station controls the plurality of RISs. A configuration parameter is generated according to the first RIS and sent in a multicast mode. According to the received configuration parameter, the second RIS calculates its own codebook and configures and applies the codebook. As such, the calculation amount of the base station is reduced, the problems of high calculation amount, high signaling overheads, and unsatisfactory codebook control timeliness are overcome, and the overheads of codebook control signaling between the base station and the RISs are reduced. Therefore, the timeliness of codebook control is improved, the range of system application scenarios is widened, and system capacity is improved.

FIG. 4 is a flowchart of generating the first configuration information according to the location information of the first RIS according to an embodiment of the present disclosure. The first configuration information includes a first incident angle. In some embodiments, the method for controlling RIS networking includes, but not limited to, the following step.

In a step of S410, the first incident angle is obtained according to the location information of the first RIS and location information of the base station.

In some embodiments, the base station includes a multicast base station and a communication source base station, the first configuration information includes a first incident angle, and generating the first configuration information according to the location information of the first RIS includes: obtaining, by the multicast base station, the first incident angle according to the location information of the first RIS and location information of the communication source base station. The location information of the first RIS includes absolute location information of the first RIS. The communication source base station is a communication source corresponding to a channel formed after the first RIS is configured according to a codebook. When the multicast base station which sends the configuration information is not the communication source base station, the multicast base station obtains the first incident angle according to the location information of the first RIS and the location information of the communication source base station. Because the gNB₁ to gNBₘ can acquire the location information Lₓ,L_{y},L_{z} relative to the gNB₀ by presetting or delivery in advance, the multicast base station can acquire the location information of the communication source base station according to the relative location information and its own absolute location information, and then obtain the first incident angle.

In some embodiments, the communication source base station may serve as the multicast base station which sends the configuration information. When the multicast base station is not an intermediate node base station, the multicast base station can obtain the first incident angle according to the location information of the first RIS and its own absolute location information. As such, the flexibility of RIS networking is improved. Whether the communication source base station serves as the multicast base station which sends the configuration information is not limited in the embodiment.

In some embodiments, the base station includes a multicast base station and a communication source base station, the first configuration information includes a first incident angle, and generating the first configuration information according to the location information of the first RIS includes: sending, by the multicast base station, the first location information to a computing base station; and receiving, by the multicast base station, the first incident angle sent by the computing base station, and the first incident angle is an incident angle calculated by the computing base station according to the location information of the first RIS. In other words, the multicast base station which sends the configuration information is not the computing base station that performs codebook calculation processing, but serves as an intermediate node to send the first location information to the computing base station. After receiving the first location information, the computing base station calculates the first incident angle, and then sends the first incident angle to the multicast base station, for the multicast base station to perform the subsequent operation of delivering the configuration information.

In some embodiments, the computing base station may serve as the multicast base station which sends the configuration information. When the multicast base station is not an intermediate node base station, the multicast base station can obtain the first incident angle according to the location information of the first RIS and its own absolute location information. As such, the flexibility of RIS networking is improved. Whether the computing base station serves as the multicast base station which sends the configuration information is not limited in the embodiment. For example, RIS₀ reports the absolute location information to gNB₀, gNB₀ transmits the absolute location information of RIS₀ to gNBₓ for angle calculation, and gNBₓ calculates the incident angle aᵢ₀,bᵢ₀,cᵢ₀ of the RIS₀ relative to the target base station gNB_{y} by using a commonly used three-dimensional calculation method according to absolute location information of the gNB_{y} and the absolute location information of the RIS₀; RIS₀ reports the absolute location information to gNB₀, gNB₀ transmits the absolute location information of RIS₀ to gNBₓ for angle calculation, and gNBₓ calculates the incident angle aᵢ₀,bᵢ₀,cᵢ₀ of the RIS₀ relative to gNB_{y} by using a commonly used three-dimensional calculation method according to absolute location information of the target base station gNBₓ, relative location information Lₓ,L_{y},L_{z} of gNBₓ and gNB_{y}, and the absolute location information of the RIS₀.

In some embodiments, the location information of the communication source base station includes absolute location information of the communication source base station, and a method for acquiring the absolute location information of the communication source base station includes: obtaining, by the multicast base station, the absolute location information of the communication source base station according to second relative location information and absolute location information of the multicast base station, where the second relative location information represents a relationship between relative locations of the multicast base station and the communication source base station.

FIG. 5 is a flowchart of generating the first configuration information according to an embodiment of the present disclosure. After obtaining the first incident angle according to the location information of the first RIS and location information of the communication source base station, the method for controlling RIS networking includes, but not limited to, the following steps.

In a step of S510, a first exit angle is obtained according to working scenario information of the first reflecting surface.

In a step of S520, the first codebook is obtained according to the first incident angle and the first exit angle.

In some implementations, a first exit angle is obtained according to working scenario information of the first reflecting surface, and the first codebook is obtained according to the first incident angle and the first exit angle. The multicast base station selects an exit angle aₒ₀,bₒ₀,cₒ₀ of RIS₀ relative to gNB_{y} according to a current working scenario of RIS₀ (e.g., transmission or reflection over a large range or in a specific direction, etc.) or other general methods, and calculates a codebook W₀ of RIS₀ according to the incident angle and the exit angle; or calculates a codebook W₀ of RIS₀ by using an existing commonly used method.

In some embodiments, when the location relationship between RISs is relatively fixed, RISs transmit or reflect a signal from a gNB to different areas, and working scenarios of the method for controlling RIS networking include, but not limited to, scenarios where windows of high-speed trains serve as RISs, windows or facades of buildings serve as RISs, etc.; or when the location relationship between RISs changes slowly, RISs transmit or reflect a signal from a gNB to different areas, and working scenarios of the method for controlling RIS networking include, but not limited to, factories, ports, mines, etc. In such scenarios, the deployment positions of the RISs will change, but the relative location relationship between the RISs changes slowly, and the relative location relationship can be obtained through presetting, positioning, or other means.

In some embodiments, the first configuration information includes absolute location information of the communication source base station, and the method further includes: sending the absolute location information of the communication source base station to the primary RIS and the secondary RISs, for the primary RIS and the secondary RISs to perform codebook configuration processing according to the absolute location information of the communication source base station. For example, gNB₀ configures and delivers absolute location information of gNB_{y} through signaling broadcast or third-party communication, and RIS₀ calculates an incident angle aᵢ₀,bᵢ₀,cᵢ₀ of the RIS₀ relative to gNB_{y} by using a commonly used three-dimensional calculation method according to its own absolute location information and the absolute location information of the target base station gNB_{y}; or gNB_{y} measures the incident angle aᵢ₀,bᵢ₀,cᵢ₀ of RIS₀ relative to gNB_{y} in real time by using an existing commonly used method during communication with a terminal device.

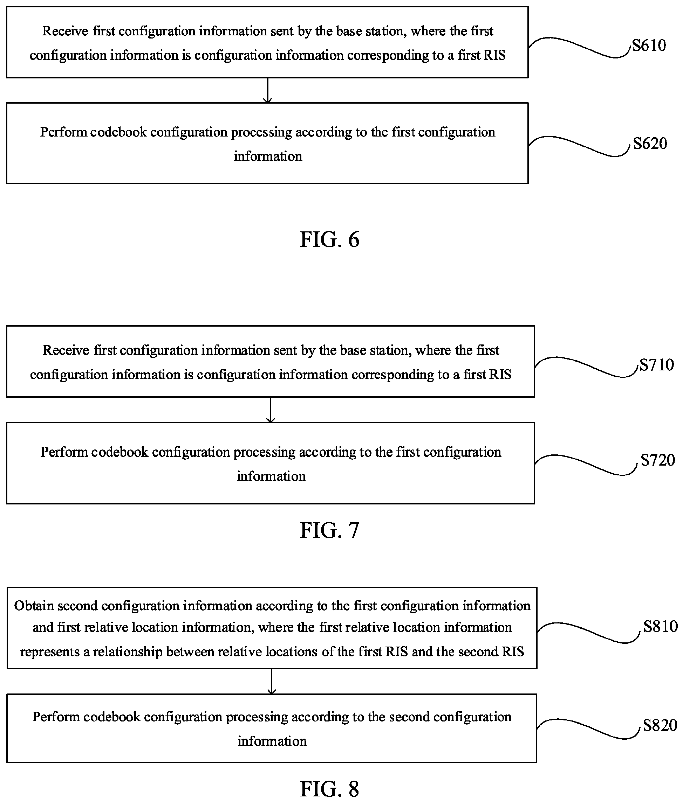

FIG. 6 is a schematic flowchart of a method for controlling RIS networking applied to a first RIS according to an embodiment of the present disclosure. The RIS network includes a base station. In some embodiments, the method for controlling RIS networking includes, but not limited to, the following steps.

In a step of S610, first configuration information sent by the base station is received, where the first configuration information is configuration information corresponding to a first RIS.

In a step of S620, codebook configuration processing is performed according to the first configuration information.

In some embodiments, the first configuration information is a first incident angle obtained by the base station according to the location information of the first RIS and the location information of the corresponding communication source base station. The first configuration information is a parameter configured and delivered by gNB₀ for RIS₀. The parameter includes, but not limited to, any combination of W₀, absolute location information of the target base station gNB_{y}, an incident angle aᵢ₀,bᵢ₀,cᵢ₀, an exit angle aₒ₀,bₒ₀,cₒ₀, and a working scenario of RIS₀. gNB₀ may deliver the first configuration information by broadcasting signaling to RIS₀ to RISₙ in multicast mode or through third-party communication, for RIS₀ to configure and apply the codebook W₀, thus realizing RIS networking configuration.

In some embodiments, the first RIS receives first configuration information sent by the base station, where the first configuration information is first configuration information obtained by the base station according to location information of the first RIS, and performs codebook configuration processing according to the first configuration information. The first RIS can change the phase, polarization, and other attributes of an incident signal to implement single-beam reflection, multi-beam reflection, diffuse scattering, refraction, transmission, and other flexible effects, so as to fill a coverage hole, improve indoor coverage, enhance edge coverage, etc. The first RIS is a dynamic/semi-static active RIS having a reconfigurable unit array codebook, which can be controlled to achieve flexible beam reflection patterns and directions.

FIG. 7 is a schematic flowchart of a method for controlling RIS networking applied to a second RIS according to an embodiment of the present disclosure. The RIS network includes a base station. In some embodiments, the method for controlling RIS networking includes, but not limited to, the following steps.

In a step of S710, first configuration information sent by the base station is received, where the first configuration information is configuration information corresponding to a first RIS.

In a step of S720, codebook configuration processing is performed according to the first configuration information.

In some embodiments, the process of performing codebook configuration processing according to the second configuration information is as follows. The second RISs RIS₁ to RISₙ monitor a configuration parameter in groups, where the configuration parameter may include, but not limited to, any combination of W₀, absolute location information of the target base station gNB_{y}, an incident angle aᵢ₀,bᵢ₀,cᵢ₀, an exit angle aₒ₀,bₒ₀,cₒ₀, and a working scenario of RIS₀. The second RIS RIS₁ calculates a codebook W₁ by using a method including, but not limited to the following, and configures and applies the codebook W₁. Similarly, the other second RISs RIS₂ to RISₙ respectively calculate their respective codebooks W₂ to Wₙ, and configure and apply the codebooks.

FIG. 8 is a schematic flowchart of a method for controlling RIS networking applied to a second RIS according to an embodiment of the present disclosure. The RIS network includes a base station. In some embodiments, the method for controlling RIS networking includes, but not limited to, the following steps.

In a step of S810, second configuration information is obtained according to the first configuration information and first relative location information, where the first relative location information represents a relationship between relative locations of the first RIS and the second RIS.

In a step of S820, codebook configuration processing is performed according to the second configuration information.

In some embodiments, methods of acquiring the first relative location information include, but not limited to, presetting, positioning, mutual communication, or third-party configuration and delivery.

In some embodiments, the first configuration information includes a first codebook, the second configuration information includes a second codebook, and obtaining second configuration information according to the first configuration information and first relative location information includes: obtaining the second codebook according to the first codebook and the first relative location information.

In some embodiments, the first configuration information includes absolute location information of the communication source base station, and the method further includes: obtaining the second configuration information according to the absolute location information of the communication source base station and absolute location information of the RIS; and performing codebook configuration processing according to the second configuration information.

In some embodiments, the second RIS receives first configuration information sent by the base station, where the first configuration information is first configuration information obtained by the base station according to location information of the first RIS; obtains second configuration information according to the first configuration information and first relative location information, where the first relative location information represents a relationship between relative locations of the first RIS and the second RIS; and performs codebook configuration processing according to the second configuration information. According to the received configuration parameter, the second RIS calculates its own codebook and configures and applies the codebook. As such, the calculation amount of the base station is reduced, and the overheads of codebook control signaling between the base station and the RISs are reduced. Therefore, the timeliness of codebook control is improved, the range of system application scenarios is widened, and system capacity is improved.

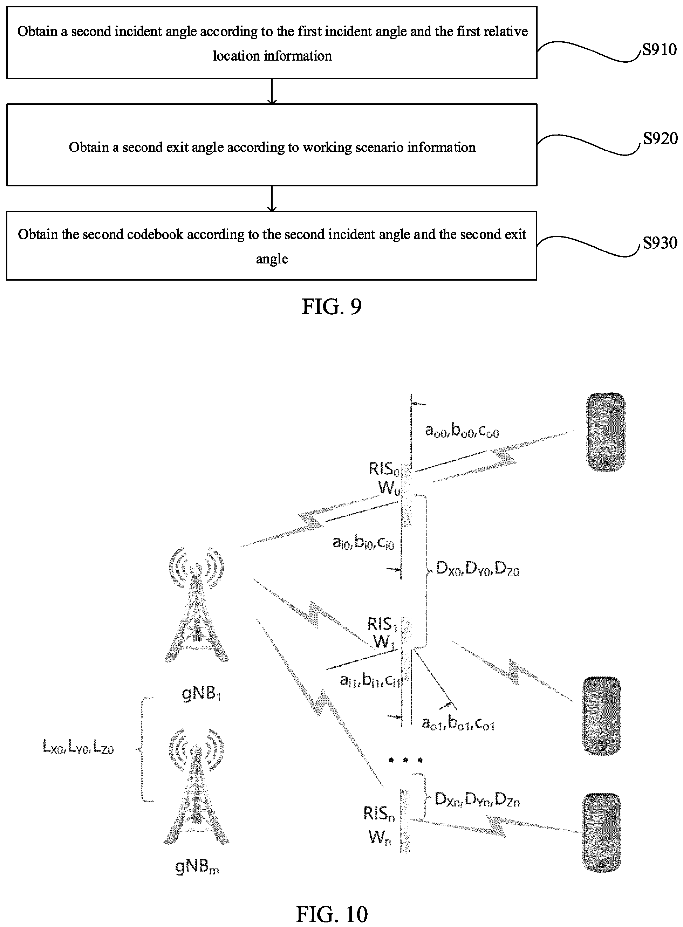

FIG. 9 is a flowchart of obtaining second configuration information according to an embodiment of the present disclosure. The first configuration information includes a first incident angle, and the second configuration information includes a second codebook. In some embodiments, the method for controlling RIS networking includes, but not limited to, the following steps.

In a step of S910, a second incident angle is obtained according to the first incident angle and the first relative location information.

In a step of S920, a second exit angle is obtained according to working scenario information.

In a step of S930, the second codebook is obtained according to the second incident angle and the second exit angle.

In some embodiments, the process of calculating the incident angle aᵢ₁,bᵢ₁,cᵢ₁ by the second RIS includes, but not limited to, the following methods: calculating the incident angle aᵢ₁,bᵢ₁,cᵢ₁ by using a commonly used three-dimensional calculation method according to the incident angle aₒ₀,bₒ₀,cₒ₀ of RIS₀ and location information Dₓ₁,D_{y1},D_{z1} of RIS₁ relative to RIS₀; or directly calculating W₁ according to the codebook W₀ of RIS₀ and location information Dₓ₁,D_{y1},D_{z1} of RIS₁ relative to RIS₀; or calculating the incident angle aᵢ₁,bᵢ₁,cᵢ₁ of RIS₁ relative to gNB_{y} by using a commonly used three-dimensional calculation method according to absolute location information of the gNB_{y} and the absolute location information of RIS₁.

In some embodiments, after the incident angle aᵢ₁,bᵢ₁,cᵢ₁ of the second RIS RIS₁ is calculated, an exit angle aₒ₁,bₒ₁,cₒ₁ of the second RIS RIS₁ is selected according to a current working scenario of the second RIS or according to a working scenario preset by the second RIS or a working scenario configured and delivered; and a codebook W₁ of RIS₁ is calculated according to the incident angle and the exit angle by using an existing method for RISs, or calculated by using an existing commonly used method.

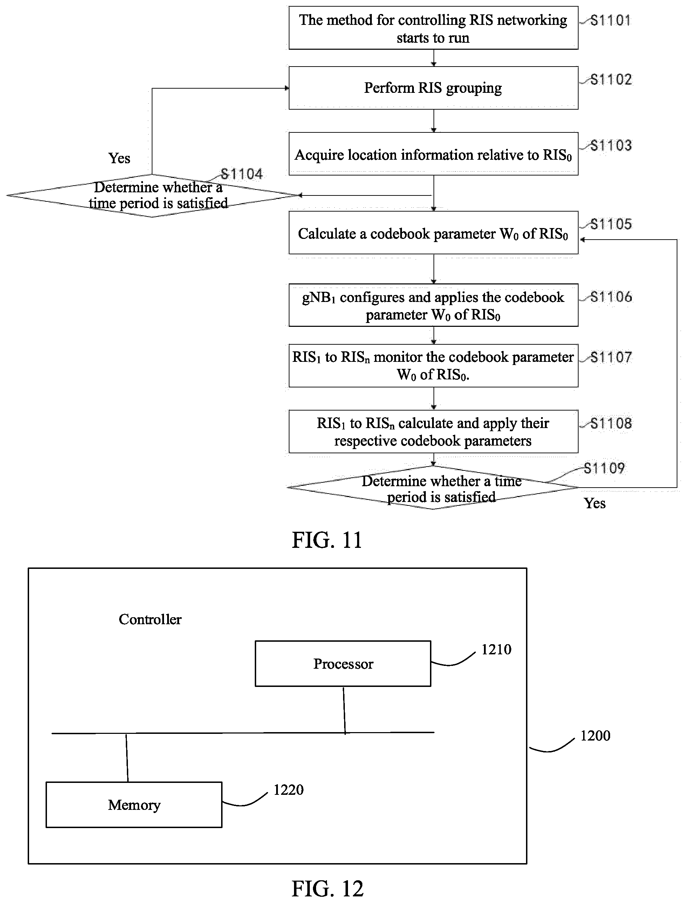

FIG. 10 is a schematic structural diagram of RIS networking according to an embodiment of the present disclosure. FIG. 11 is a schematic flowchart of an example of a method for controlling RIS networking according to an embodiment of the present disclosure. The method for controlling RIS networking includes, but not limited to, the following steps.

In a step of S1101, the method for controlling RIS networking starts to run.

In a step of S1102, RIS grouping is performed.

In a step of S1103, location information relative to RIS₀ is acquired.

In a step of S1104, it is determined whether a time period for updating RIS₀ location information is satisfied, and if yes, S1102 is executed.

In a step of S1105, a codebook parameter W₀ of RIS₀ is calculated.

In a step of S1106, gNB₁ configures and applies the codebook parameter W₀ of RIS₀.

In a step of S1107, RIS₁ to RISₙ monitor the codebook parameter W₀ of RIS₀.

In a step of S1108, RIS₁ to RISₙ calculate and apply their respective codebook parameters.

In a step of S1109, it is determined whether a time period for updating the codebook parameter W₀ of RIS₀ is satisfied, and if yes, S1105 is executed.

In some embodiments, the method including the above steps S1101 to S1109 involves: determining a first RIS and a second RIS from a plurality of RISs; acquiring location information of the first RIS; generating first configuration information according to the location information of the first RIS; and sending the first configuration information to the first RIS and the second RIS, for the first RIS to perform codebook configuration processing according to the first configuration information, and for the second RIS to obtain second configuration information according to the first configuration information and first relative location information, and perform codebook configuration processing according to the second configuration information. A configuration parameter is generated according to the first RIS and sent in a multicast mode. According to the received configuration parameter, the second RIS calculates its own codebook and configures and applies the codebook. As such, the calculation amount of the base station is reduced, and the overheads of codebook control signaling between the base station and the RISs are reduced. Therefore, the timeliness of codebook control is improved, the range of system application scenarios is widened, and system capacity is improved.

FIG. 12 is a structural diagram of a controller according to an embodiment of the present disclosure. An embodiment of the present disclosure provides a controller 1200, including: a memory 1220, a processor 1210, and a computer program stored in the memory and executable by the processor. The computer program, when executed by the processor 1210, causes the processor 1210 to implement the method for controlling RIS networking in any one of the above embodiments, for example, implements the method steps S210 to S220 in FIG. 2, the method steps S310 to S330 in FIG. 3, the method step S410 in FIG. 4, the method steps S510 to S520 in FIG. 5, the method steps S610 to S620 in FIG. 6, the method step S710 to S720 in FIG. 7, the method steps S810 to S820 in FIG. 8, the method steps S910 to S930 in FIG. 9, or the method steps S1101 to S1109 in FIG. 11.

In addition, an embodiment of the present disclosure provides an RIS networking system, including the controller described above. Because the RIS networking system of the embodiment of the present disclosure includes the controller of the above embodiment, and the controller of the above embodiment can execute the method for controlling RIS networking in the above embodiments, reference may be made to the implementations and technical effects of the method for controlling RIS networking in any one of the above embodiments for implementations and technical effects of the system in the embodiment of the present disclosure.

In addition, an embodiment of the present disclosure provides a computer-readable storage medium, storing a computer-executable instruction which, when executed by one or more control processors, causes the one or more control processors to implement, for example, the method steps S210 to S220 in FIG. 2, the method steps S310 to S330 in FIG. 3, the method step S410 in FIG. 4, the method steps S510 to S520 in FIG. 5, the method steps S610 to S620 in FIG. 6, the method step S710 to S720 in FIG. 7, the method steps S810 to S820 in FIG. 8, the method steps S910 to S930 in FIG. 9, or the method steps S1101 to S1109 in FIG. 11.

The present disclosure has the following beneficial effects: determining a first RIS and a second RIS from a plurality of RISs; and sending first configuration information corresponding to the first RIS to the first RIS and the second RIS, for the first RIS and the second RIS to perform codebook configuration processing. A configuration parameter is generated according to the first RIS and sent in a multicast mode. According to the received configuration parameter, the second RIS calculates its own codebook and configures and applies the codebook. As such, the calculation amount of the base station is reduced, and the overheads of codebook control signaling between the base station and the RISs are reduced. Therefore, the timeliness of codebook control is improved, the range of system application scenarios is widened, and system capacity is improved.

Those having ordinary skills in the art can understand that all or some of the steps in the methods disclosed above and the functional modules/units in the system and the apparatus can be implemented as software, firmware, hardware, and appropriate combinations thereof. Some or all physical components may be implemented as software executed by a processor, such as a central processing unit, a digital signal processor, or a microprocessor, or as hardware, or as an integrated circuit, such as an application-specific integrated circuit. Such software may be distributed on a computer-readable medium, which may include a computer storage medium (or non-transitory medium) and a communication medium (or transitory medium). As is known to those having ordinary skills in the art, the term "computer storage medium" includes volatile and nonvolatile, removable and non-removable media implemented in any method or technology for storage of information (such as computer-readable instructions, data structures, program modules, or other data). The computer storage medium includes, but not limited to, a Random Access Memory (RAM), a Read-Only Memory (ROM), an Electrically Erasable Programmable Read-Only Memory (EEPROM), a flash memory or other memory technology, a Compact Disc Read-Only Memory (CD-ROM), a Digital Versatile Disc (DVD) or other optical storage, a cassette, a magnetic tape, a magnetic disk storage or other magnetic storage device, or any other medium which can be used to store the desired information and can be accessed by a computer. In addition, as is known to those having ordinary skills in the art, the communication medium typically includes computer-readable instructions, data structures, program modules, or other data in a modulated data signal such as a carrier or other transport mechanism, and can include any information passing medium.

## Claims

1. A method for controlling Reconfigurable Intelligent Surface (RIS) networking, applied to a base station in an RIS network, wherein the RIS network comprises a plurality of RISs, the method comprising:
determining a first RIS and a second RIS from a plurality of RISs; and
sending first configuration information corresponding to the first RIS to the first RIS and the second RIS, for the first RIS and the second RIS to perform codebook configuration processing.

2. The method for controlling RIS networking of claim 1, wherein sending first configuration information corresponding to the first RIS to the first RIS and the second RIS, for the first RIS and the second RIS to perform codebook configuration processing comprises:
acquiring location information of the first RIS;
generating the first configuration information according to the location information of the first RIS;
sending the first configuration information to the first RIS and the second RIS, for the first RIS to perform codebook configuration processing according to the first configuration information, and for the second RIS to obtain second configuration information according to the first configuration information and first relative location information, and perform codebook configuration processing according to the second configuration information, wherein the first relative location information represents a relationship between relative locations of the first RIS and the second RIS.

3. The method for controlling RIS networking of claim 1 or 2, wherein the second RIS is an RIS capable of receiving a communication signal from the base station, and the first RIS is an RIS capable of transmitting a communication signal to the base station among the second RIS.

4. The method for controlling RIS networking of claim 3, wherein the first configuration information comprises a first incident angle, and generating the first configuration information according to the location information of the first RIS comprises:
obtaining the first incident angle according to the location information of the first RIS and location information of the base station.

5. The method for controlling RIS networking of claim 4, wherein the base station comprises a multicast base station and a communication source base station, the first configuration information comprises a first incident angle, and generating the first configuration information according to the location information of the first RIS comprises:
obtaining, by the multicast base station, the first incident angle according to the location information of the first RIS and location information of the communication source base station.

6. The method for controlling RIS networking of claim 3, wherein the base station comprises a multicast base station and a computing base station, the first configuration information comprises a first incident angle, and generating the first configuration information according to the location information of the first RIS comprises:
sending, by the multicast base station, the first location information to the computing base station; and
receiving, by the multicast base station, the first incident angle sent by the computing base station, wherein the first incident angle is an incident angle calculated by the computing base station according to the location information of the first RIS.

7. The method for controlling RIS networking of claim 4, wherein the first configuration information comprises a first codebook, and after obtaining the first incident angle according to the location information of the first RIS and location information of the base station, the method comprises:
obtaining a first exit angle according to working scenario information of the first reflecting surface; and
obtaining the first codebook according to the first incident angle and the first exit angle.

8. The method for controlling RIS networking of claim 5, wherein the location information of the communication source base station comprises absolute location information of the communication source base station, and a method for acquiring the absolute location information of the communication source base station comprises:
obtaining, by the multicast base station, the absolute location information of the communication source base station according to second relative location information and absolute location information of the multicast base station, wherein the second relative location information represents a relationship between relative locations of the multicast base station and the communication source base station.

9. A method for controlling Reconfigurable Intelligent Surface (RIS) networking, applied to a first RIS in an RIS network, wherein the RIS network comprises a base station, the method comprising:
receiving first configuration information sent by the base station, wherein the first configuration information is configuration information corresponding to the first RIS; and
performing codebook configuration processing according to the first configuration information.

10. A method for controlling Reconfigurable Intelligent Surface (RIS) networking, applied to a second RIS in an RIS network, wherein the RIS network comprises a base station, the method comprising:
receiving first configuration information sent by the base station, wherein the first configuration information is configuration information corresponding to a first RIS; and
performing codebook configuration processing according to the first configuration information.

11. The method for controlling RIS networking of claim 10, wherein the first configuration information is first configuration information obtained by the base station according to location information of the first RIS, and performing codebook configuration processing according to the first configuration information comprises:
obtaining second configuration information according to the first configuration information and first relative location information, wherein the first relative location information represents a relationship between relative locations of the first RIS and the second RIS; and
performing codebook configuration processing according to the second configuration information.

12. The method for controlling RIS networking of claim 11, wherein the first configuration information comprises a first incident angle, the second configuration information comprises a second codebook, and obtaining second configuration information according to the first configuration information and first relative location information comprises:
obtaining a second incident angle according to the first incident angle and the first relative location information;
obtaining a second exit angle according to working scenario information; and
obtaining the second codebook according to the second incident angle and the second exit angle.

13. The method for controlling RIS networking of claim 11, wherein the base station comprises a communication source base station, the first configuration information comprises absolute location information of the communication source base station, and the method further comprises:
obtaining the second configuration information according to the absolute location information of the communication source base station and absolute location information of the RIS; and
performing codebook configuration processing according to the second configuration information.

14. A controller, comprising a memory, a processor, and a computer program stored in the memory and executable by the processor, wherein the computer program, when executed by the processor, causes the processor to perform the method for controlling Reconfigurable Intelligent Surface (RIS) networking of any one of claims 1 to 13.

15. A computer-readable storage medium, storing a computer-executable instruction which, when executed by a processor, causes the processor to perform the method for controlling Reconfigurable Intelligent Surface (RIS) networking of any one of claims 1 to 13.
